# EUROPÄISCHE PATENTSCHRIFT

(11) **EP 2 116 357 B1**
(45) Veröffentlichungstag und Bekanntmachung des Hinweises auf die Patenterteilung: **12.09.2012**
(21) Anmeldenummer: 09006296.9
(22) Anmeldetag: 08.05.2009
(51) Int. Cl.: B29C 70/30, B29B 11/16, B60N 2/70

(54) **Verfahren zur Herstellung einer Polsterauflage**
Method for creating a padded overlay
Procédé de fabrication d'un coussin

(30) Priorität: 09.05.2008 DE 102008023089; 31.07.2008 DE 102008035621
(43) Veröffentlichungstag der Anmeldung: 11.11.2009
(73) Patentinhaber: Johnson Controls GmbH, 51399 Burscheid (DE); Alba tooling & engineering GmbH, 32278 Kirchlengerm (DE)
(72) Erfinder: Janz, Michael, 32609 Hüllhorst (DE); Weingärtner, Andreas, 32351 Stemwede (DE); Klusmeier, Werner, 32312 Lübbecke (DE); Naue, Anton, 32312 Lübbecke (DE); Pogorevc, Branko, 2382 Mislinja (SI)
(74) Vertreter: Brosch, Oliver

(56) Entgegenhaltungen:
- DE-A1-102005 035 108
- US-A- 4 923 731
- Werner Klusmeier: "Effizienzschub für Naturfasern" textile network Juni 2007 (2007-06), XP002538835 Gefunden im Internet: URL:http://www.textile-network.de/content/ textile+network/138/Textil/136/64617_TN-07 -06_017xd0407tn.html> [gefunden am 2009-07-27]
- Johnson Controls GmbH: "FaserTec - Eco-Friendly Seat Pads With Superior Comfort And Durability" 2008, XP002538836 Gefunden im Internet: URL:http://www.johnsoncontrols.com/publish /etc/medialib/jci/ae/Downloads.Par.42351.F ile.dat/FaserTec%20Brochure.html> [gefunden am 2009-07-27]
- F. C. CAMPBELL: "Manufacturing Processes for Advanced Composites" 2004, ELSEVIER , Oxford, UK , XP002538837 ISBN: 1-8561-7415-8 , Seiten 416-417 * Seite 416 *

## Beschreibung

Die Erfindung bezieht sich auf ein Verfahren zur Herstellung eines Polsterelements bzw. aus im wesentlichen einem Polstermaterial, bevorzugt ein Faserverbundwerkstoff, insbesondere einer Polsterauflage für einen Kraftfahrzeugsitz. Das Polsterelement umfasst hierbei insbesondere ein Polsterelement bzw. eine Polsterauflage für ein Sitzteil und ein Polsterelement bzw. eine Polsterauflage für ein Lehnenteil, wobei das Polsterelement die Trägerstruktur des Sitzes aus Metall oder Kunststoff zur Erhöhung des Sitzkomforts überdeckt.

Über 90 % der Polsterauflagen für Sitze und Lehnen im Möbel- und Automobilbereich bestehen aus Polyurethanweichschaum. Der Hauptgrund für die überdurchschnittliche Präsenz von Polyurethanweichschaum in Polsterauflagen liegt im Preis des Endproduktes begründet. Bei gleicher Kontur und gleichem Aufbau ist aufgrund der Nacharbeit wie Stanzen und Schleifen bei der Verwendung von Fasern die Polsterauflage teurer. Allerdings hat das Faserbauteil stets den Vorteil des besseren Sitzklimas.

Aus dem Stand der Technik sind verschiedene Verfahren zur Herstellung solcher Polsterauflagen aus Faserverbundwerkstoff - beispielsweise aus Kokosfasern und Latex als Bindemittel - für einen Kraftfahrzeugsitz bekannt.

Das Dokument von Werner Klusmeier: "Effizienzschub für Naturfasern" in textile network von Juni 2007 offenbart ein Verfahren zur Herstellung eines Sitzpolsterelements zur Verwendung in einem Kraftfahrzeug, wobei ein Faser-Latex-Gemisch in einem Formwerkzeug geformt wird.

Das Dokument US 4,923,731 löst das Problem der Abfall bzw. der Verschnitt zu reduzieren bzw. gänzlich zu eliminieren, in dem Bereich der Ausformung von flüssiger Kompositmaterialen.

Beim sogenannten Gummihaarverfahren werden zuerst Flore aus Fasern und dem Bindemittel Latex gelegt. Aus den Floren werden Stanzlinge gestanzt, die nochmals mit Latex besprüht werden und anschließend manuell in Werkzeuge eingelegt bzw. eingebaut werden. Durch die Werkzeuge wird ca. 100°C heiße Luft geleitet, so dass das Latex/Fasergemisch im Werkzeug trocknet, wonach das geformte und getrocknete Polsterteil aus dem Werkzeug entnommen wird. Danach muss das Polsterteil beschnitten oder gestanzt werden. Anschließend wird der beim Schneiden oder beim Stanzen entstandene Grat durch manuelles Schleifen entfernt. Der letzte Arbeitsschritt ist das Vulkanisieren der Teile in einem Autoklav, wobei auch häufig die Vulkanisation direkt nach der Entformung der Polsterauflagen geschehen kann. Diese Prozessschritte können je nach Kontur und Geometrie des Bauteiles vertauscht werden. Üblicherweise können dann die Polsterauflagen weiterhin veredelt werden, indem bestimmte Bereiche mit Schaum oder auch mit Vlies kaschiert werden.

Ein weiteres Serienverfahren - bekannt unter dem Begriff"FaserTec"zeichnet sich dadurch aus, dass nicht Flore mit einer Legemaschine gefertigt werden müssen, sondern die Fasern mit dem Bindemittel (z. B. Latex) direkt durch einen Streukopf in Werkzeuge gestreut werden. Durch diese Verbesserung des Verfahrens konnte der Legeprozess eingespart werden, allerdings sind alle nachgeschalteten mechanischen Eingriffe wie Schneiden, Stanzen oder Schleifen einzeln oder in Kombination nach wie vor unverzichtbar. Üblicherweise sind bei dem FaserTec Verfahren die Werkzeuge auf Rundtischen angeordnet mit 4 oder 5 Werkzeugen. Hauptprozesse dieser Anordnung sind das Streuen der Fasern und des Bindemittels in das Werkzeug und der Trocknungsvorgang. Anschließend werden die Teile geschnitten und/oder gestanzt, geschliffen und vulkanisiert wie beim klassischen Gummihaarverfahren.

In Ergänzung der beschriebenen in Serie befindenden Gummihaar- und FaserTec Verfahren gibt es noch weitere Entwicklungen von Verfahren, die als Grundwerkstoff Polyesterfasern aufweisen. Hierbei handelt es sich um das sogenannte Neocurle-Verfahren, indem Polyethersulfon oder Polyethylenterephthalat Fasern (kurz: PESIPET Fasern) mit einem Bindemittel wie beispielsweise PUR benetzt und anschließend das Polsterteil in einem taumelnden Werkzeug ausreagiert. Dieses Vorfahren ist sehr aufwendig und teuer.

In Ergänzung des Neocurie Verfahrens wurde die Anwendung von sogenannten Bico-Fasern (Zweikomponentenfasern aus PET/PES) für Polsterauflagen für die Automobilindustrie betrieben. Dieses Verfahren wurde aufgrund der hohen Materialpreise und der in der Automobilindustrie geforderten bleibenden Setzung nicht in die Serie umgesetzt. Bei diesem Verfahren handelt es sich bei dem Grundmaterial um zwei unterschiedliche Fasern aus PET/PES, die bei unterschiedlichen Temperaturen schmelzen. Die niedrigschmelzende Faser wird in diesem Fall als Bindemittel verwendet, die bei der Prozesstemperatur zur Herstellung des Polsterteils schmilzt und damit die anderen höher schmelzenden Fasern bindet.

Der Erfindung liegt die Aufgabe zugrunde, die für die zuvor genannten Verfahren geltenden Nachteile zu vermeiden.

Die Aufgabe wird erfindungsgemäß durch ein Verfahren zur Herstellung eines Polsterelements, insbesondere ein Sitzpolsterelement zur Verwendung in einem Kraftfahrzeug, gelöst, wobei ein Vorläufermaterial in einem Formwerkzeug geformt wird, wobei das Vorläufermaterial an die zu erreichende Endform des Polsterelements angepasst wird, bevor das Formwerkzeug vollständig geschlossen wird. Hierdurch ist es erfindungsgemäß vorteilhaft möglich, dass nach der (zur Herstellung des Polsterelements im wesentlichen endgültigen) Formgebung im Formwerkzeug keinerlei weitere Bearbeitungsschritte am Rand des geformten Polsterelements - insbesondere kein Stanzen, kein Schneiden, kein Schleifen oder dergleichen- durchgeführt werden müssen. Dies führt zu einer erheblichen Kosteneinsparung im Gesamtherstellungsprozess, insbesondere deshalb, weil zumindest ein weiterer Einlegeschritt in ein weiteres (Stanz-, Schleif-) Werkzeug und der korrespondierende Entnahme- bzw. Transportprozess eingespart werden kann.

Ferner ist es erfindungsgemäß bevorzugt vorgesehen, dass das Vorläufermaterial wenigstens teilweise in einen Füllkragen eingefüllt wird, bevor das Vorläufermaterial in das Formwerkzeug eingeführt wird. Hierdurch ist es möglich, dass die laterale Ausdehnung des eingefüllten Materials des Vorläufermaterials vor der Formgebung im Formwerkzeug durch die Form des Füllkragens definiert wird und somit jegliches eingestreutes bzw. eingefülltes Vorläufermaterial zur Herstellung des Polsterelements Verwendung findet. Hierdurch ist es erfindungsgemäß in vorteilhafter Weise möglich, dass der Abfall bzw. der Verschnitt reduziert bzw. gänzlich eliminiert werden kann, so dass zusätzlich zu den verminderten Bearbeitungskosten im Hinblick auf Stanzen, Schneiden oder Schleifen im Anschluss an die Formgebung im Formwerkzeug auch die Materialkosten für das Vorläufermaterial beim erfindungsgemäßen Herstellungsverfahren reduziert werden können, was insbesondere im Hinblick auf steigende Materialkosten (insbesondere für erdölbasierte Stoffe) zunehmend relevant ist. Erfindungsgemäß wird also bevorzugt (und abweichend vom zuvor beschriebenen Faser Tec Prozess) zumindest ein wesentlicher Teil des Vorläufermaterials (insbesondere die Fasern mit dem Bindemittel) - im folgenden auch als Materialgemenge bezeichnet - mit einem Streukopf nicht direkt in das Werkzeug gestreut, sondern zuerst ein insbesondere konturgetreues oder auch einer Abwicklung des Formwerkzeugs entsprechendes Halbzeug aus dem Materialgemenge bzw. dem Vorläufermaterial hergestellt, welches vor dem im Formwerkzeug durchzuführenden Formprozess vorliegt, Besonders hervorzuheben ist, dass bei dem erfindungsgemäßen Herstellverfahren durch die Verwendung des Füllkragens eine wesentliche Reduzierung bzw. vollständige Vermeidung von nach der Formgebung notwendigen Schneid-und Schleifprozesse realisierbar ist und dass ferner zusätzlich die Reduzierung der Anzahl von (bei gleicher Produktionsleistung notwendigen) Produktionswerkzeugen möglich ist, da die Trocknung bereits in dem Füllkragen bzw. dem Vorformling-Werkzeug bzw. dem vorformgebenden Werkzeug stattfindet. Aufgrund der Tatsache, dass solche Füllkragen bzw. Vorformling-Werkzeug bzw. vorformgebende Werkzeuge erheblich kostengünstiger sind als die zur (im wesentlichen endgültigen) Formgebung des Polsterelements verwendeten Formwerkzeuge, ist erfindungsgemäß eine weitere erhebliche Kostenreduzierung möglich. Weiterhin ergibt sich erfindungsgemäß vorteilhaft, dass eine Reduzierung der Werkzeuge auf der Handhabungs- bzw. Transporteinrichtung möglich ist, da die Befüllung nicht mehr im endformgebenden Werkzeug, sondern in dem vorformgebenden Werkzeug stattfindet.

Erfindungsgemäß ist es besonders bevorzugt, wenn das Vorläufermaterial wenigstens eine Trägermateriallage und ein Polstermaterial aufweist. Hierdurch ist es erfindungsgemäß möglich, dass der Zuschnitt der Trägemateriallage und die laterale Formgebung des Polstermaterials zu unterschiedlichen Zeitpunkten erfolgt, beispielsweise die Trägermateriallage erst vor dem Einführen des Vorläufermaterials in das Formwerkzeug zugeschnitten wird und somit in einfacher Weise beispielsweise in Form eines Rechteckzuschnittes während des Füllvorgangs (bzw. Streuvorgangs) des Polstermaterials in den Füllkragen vorliegen kann, so dass die Schritte zur Weiterverarbeitung des Vorläufermaterials (insbesondere Trocknungsschritte) sowie der Transport des Vorläufermaterials einfacher gestaltet werden kann.

Erfindungsgemäß ist es besonders bevorzugt, wenn die Trägermateriallage nach dem Einfüllen des Palstermaterials in den Füllkragen und vor dem Einführen des Vorläufermaterials in das Formwerkzeug zugeschnitten wird, insbesondere mittels eines Laserschneidprozesses oder mittels eines Wasserstrahlschneidprozesses. Hierdurch ist es erfindungsgemäß möglich, dass der Zuschnitt der Trägermateriallage zum einen besonders einfach und schnell erfolgen kann und zum anderen besonders kostengünstig realisiert werden kann. Gemäß einer alternativen Ausführungsform der vorliegenden Erfindung kann es umgekehrt auch in bevorzugter Weise vorgesehen sein, dass die Trägermateriallage vor dem Einfüllen des Polstermaterials in den Füllkragen zugeschnitten wird. Hierdurch ist es möglich, die Trägermateriallage unabhängig von dem (nach dem Einfüllen des Polstermaterials in den Füllkragen vorhandenen) Polstermaterial zu schneiden. Bei dieser zuletzt genannten Ausführungsvariante des Verfahrens gemäß der vorliegenden Erfindung ist es auch möglich, dass auch die (bereits zugeschnittene) Trägermateriallage in den Füllkragen eingelegt oder auf andere Art eingeführt wird. In dieser zuletzt genannten Alternative ist es auch möglich, dass der Füllkragen einen Boden aufweist.

Besonders bevorzugt ist es erfindungsgemäß ferner, wenn die Form des Füllkragens im wesentlichen der Abwicklung der Form des Formwerkzeugs entspricht. Hierdurch kann es erfindungsgemäß in besonders einfacher Weise erreicht werden, dass nach der Formung des Vorläufermaterials in dem Formwerkzeug keine weiteren, zur Formgebung und insbesondere zur Kantenbearbeitung erforderlichen Verfahrensschritte mehr durchgeführt werden müssen, sondern dass das aus dem Formwerkzeug ausgeworfene bzw. dem Formwerkzeug entnommene Polsterelement (wenigstens hinsichtlich seiner Kanten) direkt (bzw. nach der Durchführung von materialbezogenen Schritten wie etwa eines oder mehrerer Trocknungsschritte oder eines Vulkanisierschrittes) weiterverarbeitet werden kann, etwa mit einem Bezugsstoff überzogen werden kann.

Ferner ist es erfindungsgemäß besonders bevorzugt, wenn vor der Befüllung des Füllkragens mit dem Polstermaterial ein Einlegematerial in den Füllkragen eingelegt wird. Hierdurch ist es erfindungsgemäß vorteilhaft möglich, dass auf der Oberseite des fertigen Polsterelements bzw. direkt unterhalb der Oberseite des fertigen Polsterelements, welche in der Regel der Unterseite des Formwerkzeugs entspricht, eine besonders weiche Lage des Einlegematerials - insbesondere eine Lage eines Polyestereinlegers - platziert wird und somit ein besonders vorteilhaftes Verhalten des Polsterelements im fertigen Fahrzeugsitz erzielt wird, insbesondere ein sehr weiches Ansitzverhalten zur Komfortverbesserung.

Besonders bevorzugt ist es erfindungsgemäß, wenn die Trägermateriallage als ein Vlies, insbesondere als ein Recyclingvlies, vorgesehen ist bzw. wenn das Polstermaterial als ein Gemisch aus Fasern und einem Bindemittel, insbesondere ein Latex enthaltendes Bindemittel, vorgesehen ist. Hierdurch kann eine besonders kostengünstig herstellbares und hochqualitatives Polsterelement, insbesondere ein in hohem Maße atmungsaktives Polsterelement realisiert werden.

Ausführungsbeispiele der Erfindung sind in der Zeichnung dargestellt und in der nachfolgenden Beschreibung näher erläutert.
Figur 1 zeigt in schematischer Weise den Prozess des Befüllens eines Füllkragens zur Herstellung eines Vorläufermaterials gemäß der vorliegenden Erfindung.
Figuren 2 und 4 zeigen schematisch in einer perspektivischen Darstellung den befüllten Füllkragen zur Herstellung des Vorläufermaterials gemäß der vorliegenden Erfindung.
Figur 3 zeigt ebenfalls schematisch in einer Schnittdarstellung den befüllten Füllkragen zur Herstellung des Vorläufermaterials gemäß der vorliegenden Erfindung.
Figur 5 zeigt schematisch in einer Schnittdarstellung den Füllkragen in einem Zustand, in dem ein Einlegematerial in den Füllkragen eingelegt ist und bevor das Polstermaterial eingefüllt ist.

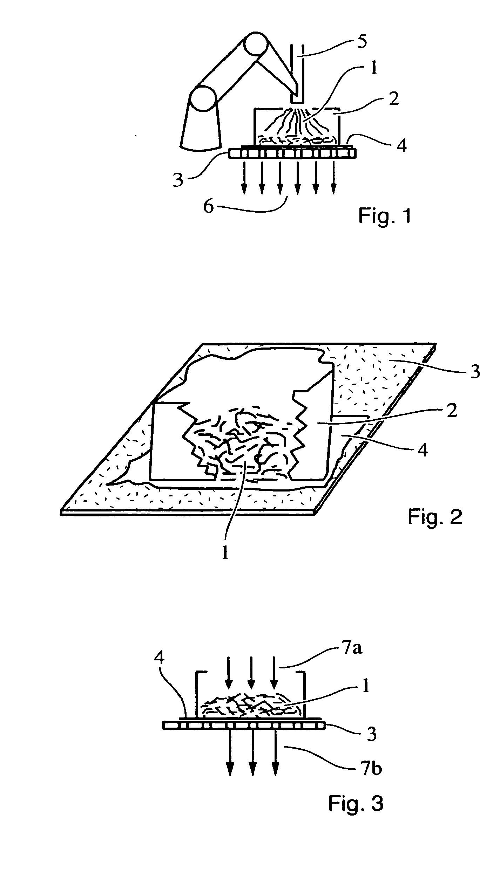

Figur 1 zeigt, wie zur Herstellung eines Polsterelements ein Materialgemenge 1 (nachfolgend auch als Polstermaterial 1 bezeichnet) in ein vorformgebendes Werkzeug 2 (nachfolgend auch als Füllkragen 2 bzw. als Vorformling-Werkzeug 2 bezeichnet) gestreut wird. Dies erfolgt erfindungsgemäß insbesondere mittels eines in Figur 1 schematisch angedeuteten Roboters. Als Füllkragen 2 bzw. als Vorformling-Werkzeug 2 denkbar ist jedes Gefäß, das die Kontur des Halbzeugs - insbesondere die laterale Kontur des Halbzeugs - vorformen kann. Das vorformgebende Werkzeug 2 ist gemäß einer bevorzugten Ausführungsform unten offen und befindet sich, wie in Figur 2 zu sehen ist, auf einer plattenförmigen Unterlage 3 wie z.B. einer Lochblechplatte oder einem konturierten Lochblech. Zwischen der plattenförmigen Unterlage 3 und vorformgebendem Werkzeug 2 befindet sich eine Trägermateriallage 4, insbesondere ein Vlies 4 bzw. ein Recyclingvlies, welche insbesondere lediglich gemäß eines Rechteckzuschnitts vorliegt, d.h. nicht der Kontur des Füllkragens 2 angepasst ist. Bei der Trägermateriallage 4 kann es sich beispielsweise um ein Baumwollvlies oder ein anderes Vlies unterschiedlicher Materialzusammensetzung handeln. Entscheidend ist, dass die Trägermateriallage 4 für gasförmige Fluide durchlässig ist, da bei dem Streuprozess an der plattenförmigen Unterlage 3 ein Unterdruck 6 angelegt wird, damit das Materialgemenge 1 nicht wieder zurückprallt. Die Trägermateriallage 4 muss aber undurchlässig für das Materialgemenge 1 selbst sein, damit dieses in dem vorformgebenden Werkzeug 2 verbleibt. Die Trägermateriallage 4 hat den weiteren Vorteil, beim späteren Trimmen der Polsterauflagen als Bezugshilfe zu wirken und so einen nachgeschalteten Prozess zu vereinfachen.

In Fig. 3 ist zu sehen, wie erwärmtes Fluid, wie beispielsweise Luft, das Materialgemenge 1 durchströmt (7a und 7b) und dabei trocknet. Der Trocknungsvorgang kann auch zu einem späteren Prozessschritt erfolgen. Hat das Materialgemenge 1 seinen notwendigen Füllstand erreicht, wird das vorformgebende Werkzeug 2 entfernt. Die Außenkontur des Halbzeugs wird durch allgemein bekannte Beschneidetechniken, wie beispielsweise Stanzen, Wasserstrahlen oder Laserschneiden, dem späteren Polsterteil entsprechend erzeugt. Hierbei wird vorteilhaft im wesentlichen lediglich die Trägermateriallage 4 beschnitten (weil die Kontur des Polstermaterials 1 bereits durch den Füllkragen definiert ist. Das Halbzeug, umfassend das Materialgemenge 1 bzw. das Polstermaterial 1 und die Trägermateriallage 4, wird im Folgenden auch als Vorläufermaterial bezeichnet.

Das beschnittene Halbzeug (bzw. das Vorläufermaterial) wird positionsgenau in das formgebende Werkzeug (bzw. Formwerkzeug) platziert, so dass keine Überstände in Dichtkanten oder Klappen auftreten. Die Positioniergenauigkeit wird erreicht durch Positionierelemente wie z.B. Stifte im Werkzeug. Die Werkzeuge können auf Transport- und Handhabungseinrichtungen wie Rundtische oder Bänder gelagert, beziehungsweise transportiert werden. Die Formung des Vorläufermaterials (bzw. des Halbzeugs) zum geformten Polsterelement (welches in der Regel noch mit einem Bezug versehen werden muss) erfolgt durch Schließen des Formwerkzeugs. Vor und/oder nach der Formung des Vorläufermaterials wird das Vorläufermaterial und insbesondere das Materialgemenge 1 weiter getrocknet.

Nach dem Entformen (aus dem Formwerkzeug) hat die Polsterauflage (bzw. das Polsterelement) ihre Endkontur erreicht und ein nachgeschalteter mechanischer Eingriff ist nicht mehr vonnöten.

Nachfolgend werden Varianten des erfindungsgemäßen Verfahrens beschrieben:

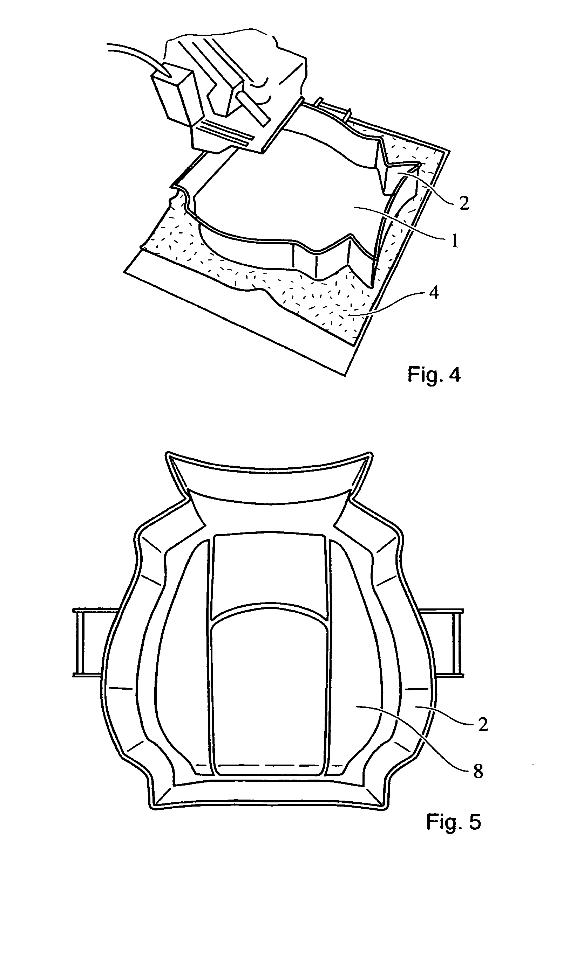

Gemäß einer ersten Variante des erfindungsgemäßen Verfahrens ist es vorgesehen, dass vor dem Befüllen des Füllkragens 2 mit dem Polstermaterial 1 ein Einlegematerial 8 in den Füllkragen 2 eingelegt wird. Dies ist in Figur 5 dargestellt. Auf das Einlegematerial 8 wird das Polstermaterial 1 (bzw. das Materialgemenge 1) gemäß dem zuvor beschriebenen Herstellungsverfahren aufgestreut. Das Einlegematerial 8 befindet sich zwischen dem Polstermaterial 1 und der Trägermateriallage 4 und ist Teil des Vorläufermaterials, wenn dieses in das Formwerkzeug eingelegt wird. Auf diese Weise ist es mit dem erfindungsgemäßen Verfahren möglich, in Richtung senkrecht auf die Oberfläche des fertigen Polsterelements unterschiedliche Härten des Polsterelements bzw. eine progressiv zunehmende Härte zu erzielen.

Gemäß einer weiteren Variante des erfindungsgemäßen Verfahrens ist es vorgesehen, dass kein oder nur ein rechteckförmiger (d.h. nicht der lateralen Kontur des Formwerkzeugs angepasster) Füllkragen 2 verwendet wird und dass die laterale Formgebung bzw. Definition der Kontur des Vorläufermaterials vor dem Einbringen in das Formwerkzeug dadurch realisiert wird, dass durch die komplette Dicke des Vorläufermaterials (d.h. insbesondere auch durch das auf die Trägermateriallage 4 aufgestreute Polstermaterial 1) ein Schneidvorgang erfolgt, beispielsweise mittels Wasserstrahlschneiden. Diese Verfahrensvariante hat den Nachteil, dass hinsichtlich des Polstermaterials 1 Verschnitt erzeugt wird, der durch die Benutzung eines konturangepassten Füllkragens vermieden werden kann.

### Bezugszeichenliste

- 1: Polstermaterial / Materialgemenge
- 2: Füllkragen / Vorformling-Werkzeug / vorformgebendes Werkzeug
- 3: plattenförmige Unterlage
- 4: Trägermateriallage / Vlies
- 5: Streukopf
- 6: Unterdruck
- 7a, 7b: erwärmtes Fluid / Luft
- 8: Einlegematerial

## Patentansprüche

1. Verfahren zur Herstellung eines Sitzpolsterelements zur Verwendung in einem Kraftfahrzeug, wobei ein Vorläufermaterial In einem Formwerkzeug geformt wird, **dadurch gekennzeichnet, dass** das Vorläufermaterial an die zu erreichende Endform des Sitzpolsterelements angepasst wird, bevor das Formwerkzeug vollständig geschlossen wird, wobei das Vorläufermaterial zumindest teilweise in einen Füllkragen (2) eingefüllt wird, bevor das Vorläufermaterial in das Formwerkzeug eingeführt wird, wobei das Vorläufermaterial wenigstens eine Trägermateriallage (4) und ein Polstermaterial (1) aufweist, wobei die Trägermateriallage (4) nach dem Einfüllen des Polstermaterials (1) in den Füllkragen (2) und vor dem Einführen des Vorläufermaterials in das Formwerkzeug zugeschnitten wird, wobei vor der Befüllung des Füllkragens (2) mit dem Polstermaterial (1) ein Einlegematerial (8) in den Füllkragen (2) eingelegt wird.

2. Verfahren nach Anspruch 1, **dadurch gekennzeichnet, dass** die Trägermateriallage (4) mittels eines Laserschneidprozesses oder mittels eines Wasserstrahlschneidprozesses zugeschnitten wird.

3. Verfahren nach einem der vorhergehenden Ansprüche, **dadurch gekennzeichnet, dass** die Form des Füllkragens (2) im Wesentlichen der Abwicklung der Form des Formwerkzeugs entspricht.

4. Verfahren nach einem der vorhergehenden Ansprüche, **dadurch gekennzeichnet, dass** die Trägermateriallage (4) insbesondere als ein Vlies, insbesondere als ein Recyclingvlies vorgesehen ist.

5. Verfahren nach einem der vorhergehenden Ansprüche, **dadurch gekennzeichnet, dass** das Polstermaterial (1) als ein Gemisch aus Fasern und einem Bindemittel, insbesondere ein Latex enthaltendes Bindemittel, vorgesehen ist.

## Claims

1. Method for producing a seat cushion element for use in a motor vehicle, wherein a precursor material is shaped in a die, **characterized in that** the precursor material is adapted to the final shape to be achieved for the seat cushion element before the die is completely closed, wherein at least part of the precursor material is placed into a filling collar (2) before the precursor material is introduced into the die, wherein the precursor material contains at least one support material layer (4) and a cushion material (1), wherein, after the cushion material (1) is placed into the filling collar (2) and before the precursor material is introduced into the die, the support material layer (4) is cut to size, and wherein, before the filling collar (2) is filled with the cushion material (1), an insert material (8) is inserted into the filling collar (2).

2. Method according to Claim 1, **characterized in that** the support material layer (4) is cut to size by means of a laser cutting process or by means of a water jet cutting process.

3. Method according to either of the preceding claims, **characterized in that** the shape of the filling collar (2) substantially corresponds to the shape layout of the die.

4. Method according to one of the preceding claims, **characterized in that** the support material layer (4) is provided in particular in the form of a non-woven fabric, in particular in the form of a non-woven recycling fabric.

5. Method according to one of the preceding claims, **characterized in that** the cushion material (1) is provided in the form of a mixture of fibres and a binder, in particular a latex-containing binder.

## Revendications

1. Procédé de fabrication d'un élément de coussin de siège pour l'utilisation dans un véhicule automobile, un matériau précurseur étant moulé dans un outil de moulage, **caractérisé en ce que** le matériau précurseur est adapté à la forme définitive de l'élément de coussin de siège que l'on veut obtenir avant que l'outil de moulage ne soit complètement fermé, le matériau précurseur étant au moins en partie versé dans un collet de remplissage (2) avant que le matériau précurseur ne soit introduit dans l'outil de moulage, le matériau précurseur présentant au moins une couche de matériau support (4) et un matériau de coussin (1), la couche de matériau support (4), après que le matériau de coussin (1) a été versé dans le collet de remplissage (2) et avant l'introduction du matériau précurseur dans l'outil de moulage, étant découpée aux dimensions, un matériau d'insert (8) étant introduit dans le collet de remplissage (2) avant le remplissage du collet de remplissage (2) avec le matériau de coussin (1).

2. Procédé selon la revendication 1, **caractérisé en ce que** la couche de matériau support (4) est découpée aux dimensions au moyen d'un processus de découpage laser ou au moyen d'un processus de découpage par jet d'eau.

3. Procédé selon l'une quelconque des revendications précédentes, **caractérisé en ce que** la forme du collet de remplissage (2) correspond essentiellement au déroulement de la forme de l'outil de moulage.

4. Procédé selon l'une quelconque des revendications précédentes, **caractérisé en ce que** la couche de matériau support (4) est prévue notamment sous forme de non-tissé, en particulier sous forme de non-tissé recyclable.

5. Procédé selon l'une quelconque des revendications précédentes, **caractérisé en ce que** le matériau de coussin (1) est prévu sous la forme d'un mélange de fibres et d'un liant, notamment un liant contenant du latex.
